# EUROPÄISCHE PATENTSCHRIFT

(11) **EP 0 963 878 B1**
(45) Veröffentlichungstag und Bekanntmachung des Hinweises auf die Patenterteilung: **10.09.2003**
(21) Anmeldenummer: 99401257.3
(22) Anmeldetag: 25.05.1999
(51) Int. Cl.: B60R 16/02

(54) **Drehverbinder mit Flachbandleitung und Rundleiter**
Rotary connector with flat cable and round cable
Connecteur rotatif à cable plat et cable rond

(30) Priorität: 09.06.1998 DE 19825692
(43) Veröffentlichungstag der Anmeldung: 15.12.1999
(73) Patentinhaber: Nexans, 75008 Paris (FR)
(72) Erfinder: Schröer, Frank, 92637 Weiden (DE); Reber, Wolfgang, 95643 Tirschenreuth (DE)
(74) Vertreter: Döring, Roger, Dipl.-Ing.

(56) Entgegenhaltungen:
- EP-A- 0 486 867
- EP-A- 0 536 599
- EP-A- 0 579 122
- EP-A- 0 820 119
- US-A- 4 401 356
- US-A- 5 685 728

## Beschreibung

Die Erfindung bezieht sich auf einen Drehverbinder mit zwei gegeneinander drehbaren Gehäuseteilen, die durch eine mindestens zwei elektrische Adern aufweisende, flexible Flachbandleitung verbunden sind, welche in einem von den Gehäuseteilen umschlossenen Zwischenraum in Windungen verläuft und endseitig an einer mindestens zwei Kontaktelemente aufweisenden Kontaktanordnung angebracht ist, in welcher jedes Kontaktelement ein einstückiges Metallteil ist, das in einer Aufnahme in einem Gehäuseteil angeordnet ist und eine Fläche aufweist, an der die entsprechende Ader der Flachbandleitung elektrisch leitend festgelegt ist, und an welches andererseits ein elektrischer Rundleiter angeschlossen ist (DE 196 04 797 A1).

Häufig besteht das Problem einer geeigneten Strom- bzw. Signalübertragung zwischen Teilen einer Vorrichtung, die gegeneinander in einem begrenzten Winkelbereich drehbar sind. Beispielsweise ist eine dauerhaft zuverlässige Verbindung für die Stromzuführung zur Auslösung des Airbags im Lenkrad eines Kraftfahrzeuges von entscheidender Bedeutung. Da Schleifkontakte aufgrund des Verschleißes und schwankender Übergangswiderstände zu diesem Zweck ungeeignet sind, wurden Drehverbinder mit Flachbandleitung entwickelt, welche eine sichere Verbindung gewährleisten.

Die Flachbandleitung - im folgenden kurz als "FBL" bezeichnet - ist bei bekannten Drehverbindern im Zwischenraum zwischen zwei gegeneinander drehbaren Gehäuseteilen desselben angeordnet und endseitig an beiden Gehäuseteilen befestigt.

Sie besteht in der Regel aus mindestens zwei voneinander beabstandeten Kupferstreifen, die zwischen zwei Kunststoffbändern eingebettet sind. Im einfachsten Fall verläuft die FBL spiralförmig nach Art einer Uhrfeder. Bei einer relativen Drehung der Gehäuseteile ändern sich Windungsdurchmesser und -zahl in Abhängigkeit von der Drehrichtung. Alternativ verlaufen die Windungen der FBL in zwei Abschnitten entlang der radial inneren und äußeren Wandung des Zwischenraumes mit entgegengesetztem Drehsinn, wobei zwischen den beiden Abschnitten eine Umkehrstelle vorhanden ist. In diesem Fall wird die FBL bei einer relativen Drehung der Gehäuseteile des Verbinders von der einen Wandung abgewickelt und von der anderen Wandung aufgenommen. Bekannt ist auch, im Zwischenraum Führungskörper oder elastische Elemente anzuordnen sowie die FBL aus elastischem Material herzustellen, um ihre sichere Führung bei der Drehung der Gehäuseteile zu gewährleisten und Beschädigungen zu vermeiden. Die äußere Kontaktierung des Drehverbinders erfolgt im allgemeinen durch Drähte oder Litzen mit näherungsweise rundem Querschnitt. Entsprechend ist es notwendig, Kontaktelemente vorzusehen, welche die Rundleiter mit den Adern der FBL elektrisch verbinden.

Ein entsprechender Drehverbinder ist in der eingangs erwähnten DE 196 04 797 A1 beschrieben. Die Kontaktanordnung dieses Drehverbinders besteht aus einem Leiterblock aus Isoliermaterial, der mit Nuten und Positionierlöchern ausgerüstet ist. Die Leiter der FBL und einer weiterführenden Leitung werden in dem Leiterblock festgelegt und über Verbindungsstäbe miteinander verbunden, mit denen sie verschweißt werden. Der Aufbau dieser Kontaktanordnung ist aufwendig, was insbesondere bei der Fertigung kleiner Stückzahlen von Nachteil ist, da spezielle Formwerkzeuge zur Herstellung der Kontaktanordnung notwendig sind. Weiterhin hat die Kontaktanordnung vergleichsweise große Abmessungen und sie ist in der radial äußeren Wandung des Drehverbinders angeordnet. Aufgrund der Vielzahl von am Lenkrad eines Fahrzeuges angeordneten Funktionselementen steht ein entsprechender Bauraum häufig nicht zur Verfügung.

Der Erfindung liegt die Aufgabe zugrunde, den eingangs geschilderten Drehverbinder so weiter zu entwickeln, daß unter Verwendung einer Kontaktanordnung mit geringen Abmessungen eine einfache und preiswerte Fertigung auch bei kleinen Stückzahlen ermöglicht wird.

Diese Aufgabe wird gemäß der Erfindung dadurch gelöst,
- daß jedes Kontaktelement durch Crimpen an dem Rundleiter befestigt und in einer ihm zugeordneten Aufnahme angeordnet ist,
- daß jedes Kontaktelement Mittel aufweist, die mit einem Gehäuseteil in Eingriff stehen und das Kontaktelement gegenüber einer axialen Verschiebung in einer Richtung fixieren, und
- daß jedes Kontaktelement mit einer der Anschlußstelle des Rundleiters abgewandten Stirnfläche an einem Anschlag des Gehäuseteils anliegt, welcher dasselbe gegenüber einer axialen Verschiebung in der entgegengesetzten Richtung festlegt.

Der Grundgedanke der Erfindung besteht darin, zur Verbindung der FBL des Drehverbinders mit einem Rundleiter Kontaktelemente zu verwenden, die von einem einstückigen Metallteil, etwa aus Kupfer, gebildet werden. Jedes Kontaktelement weist eine vorzugsweise ebene Fläche auf, beispielsweise eine Zunge, an der die jeweilige Ader der FBL stoffschlüssig fixiert ist. Zur Fixierung bietet sich zum Beispiel eine Verlötung oder Verschweißung an, etwa durch Punktschweißen oder Ultraschallschweißen. Zweckmäßig entspricht die Breite der Fläche näherungsweise der Breite einer Ader der FBL oder übersteigt sie geringfügig. Als FBL ist insbesondere eine Flachleiterbandleitung geeignet, die aus bandförmigen Kupferleitern besteht, welche in Kunststoffolien einkaschiert sind. Alternativ sind jedoch beliebige andere Ausführungen einer FBL möglich. Die Festlegung jedes Kontaktelementes am Rundleiter erfolgt durch Crimpen, vorzugsweise indem randseitige Laschen des Kontaktelementes um den Rundleiter gebogen und mit ihm verquetscht werden, da auf diese Weise eine einfach herstellbare und mechanisch belastbare Verbindung entsteht. Zur Verbesserung der Belastbarkeit besteht die Möglichkeit, mehrere Paare von Laschen vozusehen, die auf den leitenden Kern des Rundleiters sowie auf seine Isolierung gecrimpt werden.

Da die Kontaktelemente aus elektrisch leitendem Material bestehen, ist es zur Isolierung der Adern gegeneinander notwendig, jedes Kontaktelement in einer ihm zugeordneten Aufnahme des Drehverbinders anzuordnen, für dessen Gehäuseteile sich ein isolierender Kunststoff als Werkstoff anbietet. Kontaktelemente und Aufnahmen sind derart geformt, daß eine ortsfeste Fixierung durch Formschluß erfolgt. Damit ist eine Übertragung von Zugbelastungen zwischen Rundleitern und FBL ausgeschlossen. Die Zahl der Kontaktelemente entspricht der Zahl der zu kontaktierenden Adern der FBL, wobei sowohl eines als auch beide Enden der FBL mit derartigen Kontaktelementen versehen sein können. Bei entsprechender Anzahl von Aufnahmen im Drehverbinder lassen sich durch Variation der Zahl der eingesetzten Kontaktelemente Anpassungen an FBL mit unterschiedlichen Aderzahlen vornehmen. Zweckmäßig sind die Aufnahmen und somit die Kontaktelemente parallel nebeneinander angeordnet.

Aufgrund der Verwendung einstückiger Metallteile als Kontaktelemente läßt sich der Drehverbinder preiswert und mit geringem Aufwand herstellen. Als Kontaktelemente sind beispielsweise Stanzteile geeignet, die sich zu geringen Kosten in großen Stückzahlen herstellen lassen. Dabei besteht die Möglichkeit, handelsübliche Standardteile zu benutzen, die zum Crimpen an einen Rundleiter und Schweißen an eine Ader der FBL geeignet sind. Ein weiterer Vorteil ist die geringe Größe der Kontaktelemente. Ihre maximale Breite ist näherungsweise auf die Adernbreite der FBL beschränkbar. Bei abgeflachter Gestalt ist die maximale Dicke vom Crimpbereich gebildet und entspricht angenähert dem Querschnitt des Rundleiters. Daher ist der Drehverbinder in besonderer Weise für räumlich beengte Anbringungsorte geeignet.

Infolge der geringen Abmessungen der Kontaktelemente ist es in einer vorteilhaften Ausgestaltung der Erfindung möglich, ihre Aufnahmen in einer Verlängerung eines Gehäuseteils anzuordnen. Zweckmäßig ist speziell eine Anordnung der Verlängerung auf einer axialen Stirnseite des Drehverbinders. Auf diese Weise läßt sich der radiale Durchmesser des Drehverbinders auf den Wert beschränken, der zur Aufnahme der Windungen der FBL notwendig ist, während die Kontaktelemente ober- bzw. unterhalb der Ebene der Windungen angeordnet sind. Der Übergang der FBL aus der Ebene ihrer Windungen in die Verlängerung erfolgt zweckmäßig, indem sie um eine im Winkel von 45° zu ihrer Längsachse verlaufende Linie gefalzt ist, so daß sie rechtwinklig abknickt.

Das jeweilige Kontaktelement ist in der zugehörigen Aufnahme verrastet. Zu diesem Zweck sind beispielsweise Federarme mit Widerhaken geeignet, zwischen die der Crimpbereich eines Kontaktelements eingeschoben wird. Das Einsetzen der Kontaktelemente in die Aufnahmen erfolgt vorzugsweise senkrecht zur Längsachse der Rundleiter.

Weiterhin wird vorgeschlagen, die Aufnahme mit einer Abdeckung zu verschließen, die das unbeabsichtigte Lösen der Kontaktelemente verhindert. Die Befestigung der Abdeckung am Drehverbinder kann beispielsweise durch Verrastung oder Einschieben in Führungen erfolgen. Um die Montage zu vereinfachen, ist vorzugsweise lediglich eine Abdeckung vorhanden, die sämtliche Aufnahmen an einem Ende der FBL verschließt. Auch in Verbindung mit einer Abdeckung ist eine zusätzliche Verrastung der Kontaktelemente in den Aufnahmen zweckmäßig, die sie während der Montage des Drehverbinders vor dem Aufsetzen der Abdeckung in ihrer Position fixiert.

Um Belastungen der Verbindung mit dem Kontaktelement zu vermeiden, ist eine Zugentlastung der FBL zwischen dem Kontaktelement und ihren Windungen von Vorteil, die vorzugsweise durch die Abdeckung erfolgt. Eine besonders zweckmäßige Zugentlastung besteht darin, einen Abschnitt der FBL mit der Abdeckung gegen eine Oberfläche des Gehäuseteiles zu pressen. Zur Verbesserung der Zugentlastung ist die Abdeckung und/oder die Oberfläche des Gehäuseteiles im Bereich der Pressung bevorzugt mit einer aufgerauhten, z. B. gewellten, Oberfläche versehen.

Auch im Fall vergleichsweise großer, auf den Rundleiter einwirkender Kräfte ist es zu vermeiden, daß sich ein Kontaktelement unbeabsichtigt aus der Aufnahme löst. Daher kann jedes Kontaktelement einen ausgestellten Bereich aufweisen, der mit einer Gegenfläche eines Gehäuseteils im Eingriff steht und das Kontaktelement gegenüber Verschiebungen in einer axialen Richtung des Rundleiters fixiert. Denkbar ist beispielsweise, daß die Bewegung in Richtung der Rundleiter durch einen ausgestellen Bereich nach Art eines Widerhakens verhindert wird, der einen Vorsprung des Gehäuseteiles hintergreift oder in eine Aussparung eingreift. Die Verschiebung in entgegengesetzter axialer Richtung ist ausgeschlossen, da jedes Kontaktelement stirnseitig an einem Anschlag des Gehäuseteiles anliegt.

Zur Fixierung der Kontaktelemente in der vorbeschriebenen Position ist ein federndes Element der Abdeckung von Vorteil, welches die Kontaktelemente in Richtung der Aussparung preßt. Ebenso kann ein federndes Element der Abdeckung, beispielsweise eine Blattfeder, eine Druckkraft auf die Verbindung zwischen FBL und Kontaktelementen ausüben und sie damit unterstützen.

Zur Verbesserung der Zugentlastung der Rundleiter wird vorgeschlagen, auf die Crimpverbindung eine radiale Druckkraft auszuüben. Zu diesem Zweck sind Elemente der Abdeckung von Vorteil, beispielsweise Vorsprünge, welche die Druckkraft erzeugen. Die Elemente können sowohl unmittelbar an der Crimpverbindung anliegen als auch eine Druckkraft über dazwischenliegende Bauteile erzeugen. Beispielsweise besteht die Möglichkeit, die Elemente in Zwischenräume von Rastelementen einzuschieben, in welche die Crimpverbindungen eingesetzt sind.

Im folgenden Beschreibungsteil wird ein Ausführungsbeispiel des Erfindungsgegenstandes anhand der Zeichnungen näher erläutert.

Es zeigen:
Fig. 1 schematisch einen Querschnitt durch einen Drehverbinder.
Fig. 2 schematisch einen Querschnitt durch eine alternative Ausgestaltung des Drehverbinders.
Fig. 3 einen Schnitt durch ein Teil des Drehverbinders nach der Erfindung.
Fig. 4 eine Ansicht und einen Querschnitt einer Aufnahme für die Kontaktelemente des Drehverbinders.

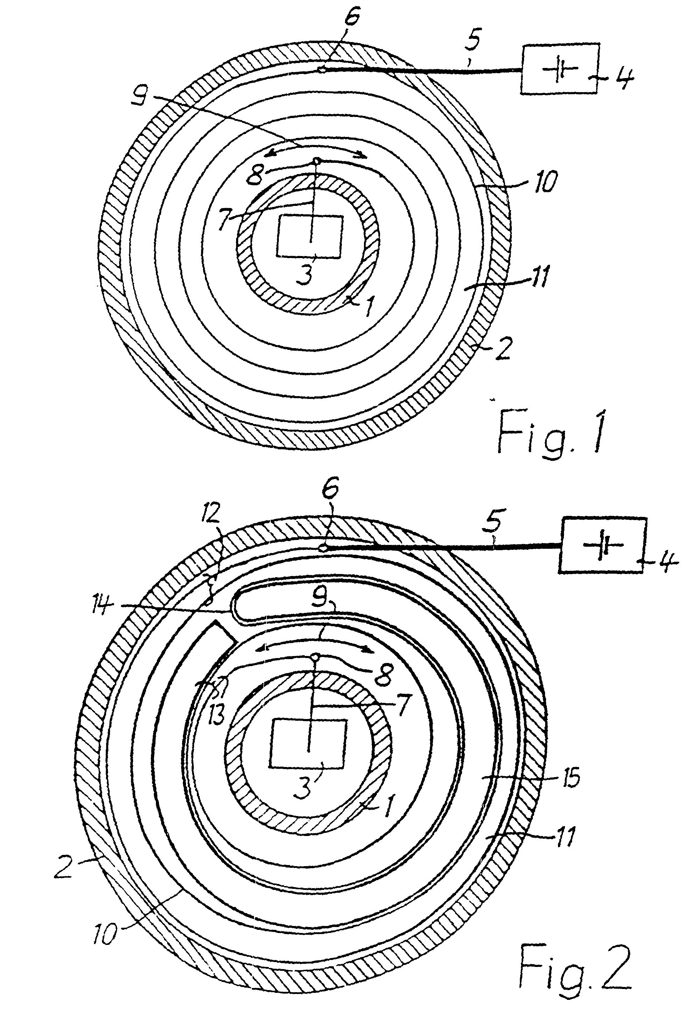

Fig. 1 gibt schematisch den Aufbau eines Drehverbinders wieder. Er besteht aus einem inneren Gehäuseteil 1 und einem äußeren Gehäuseteil 2, die gegeneinander drehbar sind. Der Drehverbinder dient beispielsweise zur Stromversorgung des Airbags im Lenkrad eines Kraftfahrzeuges, wobei das innere Gehäuseteil 1 auf die Lenkachse aufgesetzt ist. Dabei schließt der Drehverbinder die Zündvorrichtung 3 des Airbags an eine Auslöseelektronik 4 an, die ortsfest zur Karosserie angeordnet ist und von der Fahrzeugbatterie bzw. dem Bordnetz des Fahrzeuges gespeist wird. Die Verbindung der Zündvorrichtung 3 und der Auslöseelektronik 4 mit dem Drehverbinder erfolgt über Rundleiter 5 bzw. 7, die an Verbindungsstellen 6 und 8 an eine FBL 10 angeschlossen sind. Die FBL 10 verläuft uhrfederartig in Windungen im Zwischenraum 11 zwischen den Gehäuseteilen 1 und 2. Werden letztere in Richtung des Doppelpfeils 9 gegeneinander gedreht, so ändern sich Zahl und Durchmesser der Windungen der FBL 10. Bei hinreichender Länge der FBL 10 ist somit eine durchgehende elektrische Verbindung zwischen den Gehäuseteilen 1 und 2 über eine begrenzte Zahl von Umdrehungen sichergestellt.

Fig. 2 zeigt schematisch eine alternative Ausgestaltung des Drehverbinders, bei dem ein erster Abschnitt 12 der FBL 10 entlang der Wandung des äußeren Gehäuseteiles 2 eine entgegengesetzte Wickelrichtung zum zweiten Abschnitt 13 an der Wandung des inneren Gehäuseteiles 1 aufweist. Zwischen beiden Abschnitten 12 und 13 befindet sich eine Umkehrstelle 14 der FBL 10. Bei einer relativen Drehung der Gehäuseteile 1 und 2 in Richtung des Doppelpfeils 9 wird abhängig von der Drehrichtung einer der Abschnitte 12 oder 13 abgewickelt, während die FBL 10 vom anderen Abschnitt 13 oder 12 aufgenommen wird. Zur Steigerung der Funktionssicherheit ist es möglich, einen Führungskörper 15 vorzusehen.

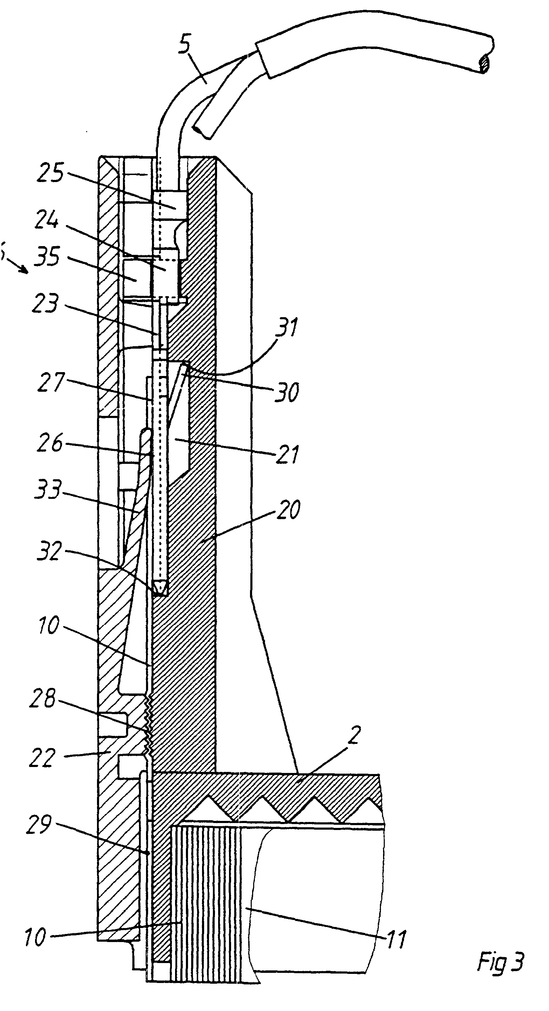

Fig. 3 gibt den Schnitt parallel zur Drehachse eines erfindungsgemäßen Drehverbinders durch die Verbindungsstelle 6 zwischen den Rundleitern 5 und der FBL 10 wieder. Die Verbindungsstelle 6 ist in einer Verlängerung 20 des Gehäuseteiles 2 in einer Aufnahme 21 angeordnet, die mit einer Abdeckung 22 verschlossen ist. Die elektrische Verbindung zwischen einer Ader 27 der FBL 10 und einem Rundleiter 5 erfolgt durch ein zu einer Kontaktanordnung gehörendes Kontaktelement 23, das in der Aufnahme 21 festgelegt ist. Zur Kontaktierung der Rundleiter 5 ist das Kontaktelement 23 mit einem Paar von Laschen 24 versehen, welche um den Leiter eines Rundleiters 5 gecrimpt sind. Ein weiteres Paar von Laschen 25 ist um die Isolierung des Rundleiters 5 gecrimpt und verbessert somit seine Befestigung. Der untere Teil des Kontaktelementes 23 wird von einer Fläche 26 gebildet, an der die Ader 27 der FBL 10 festgelegt ist, vorzugsweise durch Verschweißung. Vom Kontaktelement 23 verläuft die FBL 10 durch eine Zugentlastung. Sie wird von gewellten Oberflächen 28 von Gehäuseteil 2 und Abdeckung 22 gebildet, die unter Vorspannung beidseitig an der FBL 10 anliegen. In einem Faltungsbereich 29, der gleichfalls von der Abdeckung 22 überdeckt ist, knickt die FBL 10 senkrecht zur Zeichenebene ab, bevor sie durch einen nicht dargestellten Spalt im Gehäuseteil 2 in den Zwischenraum 11 zwischen den beiden Gehäuseteilen 1 und 2 geführt ist.

Zur formschlüssigen Fixierung in der Aufnahme 21 ist das Kontaktelement 23 mit einer Lasche 30 versehen, die von einem ausgestellten Bereich der Fläche 26 gebildet wird. Im Zusammenwirken mit einer Gegenfläche 31 der Aufnahme 21 verhindert die Lasche 30 nach Art eines Widerhakens eine Bewegung des Kontaktelementes 23 in Richtung des Rundleiters 5. Die Festlegung gegenüber einer entgegengerichteten Bewegung erfolgt durch einen Anschlag 32, an dem das Kontaktelement 23 stirnseitig anliegt. Zur Verbesserung der Festlegung ist die Abdeckung 22 mit einem Federelement 33 versehen, welches das Kontaktelement 23 in die Aufnahme 21 der Verlängerung 20 des Gehäuseteiles 2 preßt. Auf diese Weise ist ein sicherer Eingriff zwischen Lasche 30 und Gegenfläche 31 sowie das stirnseitige Anliegen des Kontaktelementes 23 am Anschlag 32 gewährleistet. Zweckmäßig liegt das Federelement 33 im Bereich der Verschweißung zwischen der Fläche 26 und der Ader 27 der FBL 10 an, so daß auch diese Verbindung unterstützt wird.

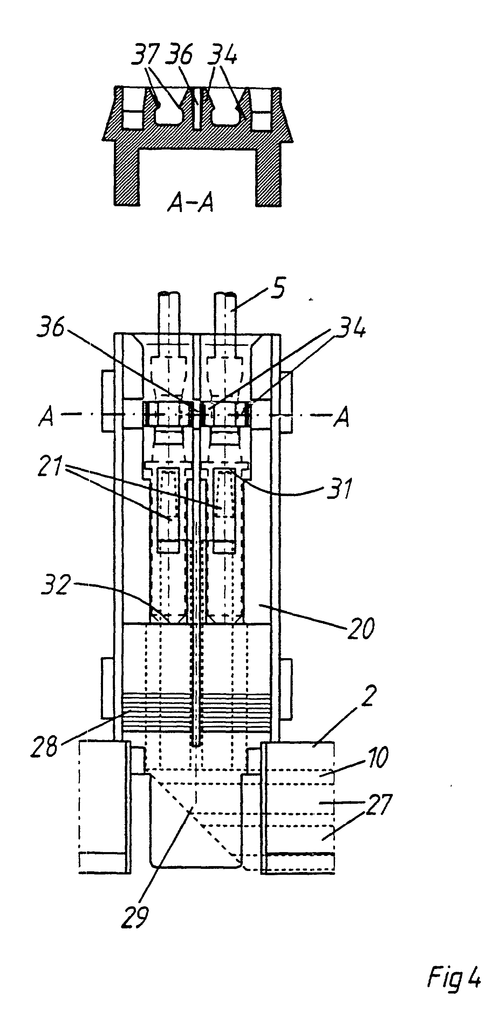

Fig. 4 zeigt eine Ansicht der Verlängerung 20 des Gehäuseteiles 2 ohne die Abdeckung 22. Die Komtaktanordnung hat hier zwei Kontaktelemente 23, die ebenso wie der Verlauf der FBL 10 mit dem Faltungsbereich 29 gestrichelt eingezeichnet sind. Die Verlängerung 20 ist mit Aufnahmen 21 für zwei Kontaktelemente 23 versehen. Selbstverständlich ist es möglich, neben ihnen Aufnahmen 21 für weitere Kontaktelemente 23 anzuordnen. Die Aufnahmen 21 sind mit Paaren von Federarmen 34 versehen, die im Schnitt A-A im Detail erkennbar sind und Erhöhungen oder Widerhaken 37 auf der Innenseite aufweisen. Zwischen den Federarmen 34 läßt sich der Crimpbereich der Kontaktelemente 23 verrasten, so daß ein hinreichender Halt auch vor dem Aufsetzen der Abdeckung 22 gewährleistet ist. Damit erleichtert sich die Montage erheblich. Die Abdeckung 22 weist bevorzugt Vorsprünge 35 auf, die in Zwischenräume 36 der Federarme 34 eingreifen und sie somit in ihrer Position fixiert. Mit dem Aufsetzen der Abdeckung 22 sind die Kontaktelemente 23 zwischen den Federarmen 34 verriegelt, so daß ein unbeabsichtigtes Lösen aus der Verrastung ausgeschlossen ist.

Im Ergebnis entsteht auf diese Weise ein Drehverbinder, der sich auch in geringen Stückzahlen preiswert fertigen läßt und aufgrund der Abmessungen und Anordnung seiner Kontaktelemente eine geringe Baugröße aufweist.

## Patentansprüche

1. Drehverbinder mit zwei gegeneinander drehbaren Gehäuseteilen (1, 2), die durch eine mindestens zwei elektrische Adern (27) aufweisende, flexible Flachbandleitung (10) verbunden sind, welche in einem von den Gehäuseteilen (1,2) umschlossenen Zwischenraum (11) in Windungen verläuft und endseitig an einer mindestens zwei Kontaktelemente (23) aufweisenden Kontaktanordnung angebracht ist, in welcher jedes Kontaktelement (23) ein einstückiges Metallteil ist, das in einer Aufnahme (21) in einem Gehäuseteil (1, 2) angeordnet ist und eine Fläche (26) aufweist, an der die entsprechende Ader (27) der Flachbandleitung (10) elektrisch leitend festgelegt ist und an welches andererseits ein elektrischer Rundleiter (5,7) angeschlossen ist, **dadurch gekennzeichnet,**
- **daß** jedes Kontaktelement (23) durch Crimpen an dem Rundleiter (5, 7) befestigt und in einer ihm zugeordneten Aufnahme (21) angeordnet ist,
- **daß** jedes Kontaktelement (23) Mittel aufweist, die mit einem Gehäuseteil (1,2) in Eingriff stehen und das Kontaktelement (23) gegenüber einer axialen Verschiebung in einer Richtung fixieren, und
- **daß** jedes Kontaktelement (23) mit einer der Anschlußstelle des Rundleiters (5,7) abgewandten Stirnfläche an einem Anschlag (32) des Gehäuseteils (1,2) anliegt, welcher dasselbe gegenüber einer axialen Verschiebung in der entgegengesetzten Richtung festlegt.

2. Drehverbinder nach Anspruch 1, **dadurch gekennzeichnet, daß** die Aufnahme (21) in einer Verlängerung (20) des entsprechenden Gehäuseteiles (1, 2) angeordnet ist.

3. Drehverbinder nach Anspruch 1 oder 2, **dadurch gekennzeichnet, daß** die Aufnahme (21) mit einer Abdeckung (22) verschlossen ist.

4. Drehverbinder nach Anspruch 3, **dadurch gekennzeichnet, daß** die Abdeckung (22) die Flachbandleitung (10) gegen eine Oberfläche (28) des mit der Aufnahme (21) versehenen Gehäuseteiles (1, 2) preßt.

5. Drehverbinder nach Anspruch 3 oder 4, **dadurch gekennzeichnet, daß** die Abdeckung (22) ein Federelement (33) aufweist, das an jedem Kontaktelement (23) und/oder an der Flachbandleitung (10) anliegt.

6. Drehverbinder nach einem der Ansprüche 3 bis 5, **dadurch gekennzeichnet, daß** die Abdeckung (22) mit radialem Druck an der Crimpverbindung zwischen Kontaktelement (23) und Rundleiter (5,7) anliegt.

## Claims

1. A rotary joint with two housing parts (1,2) rotatable in relation to each other, which are connected by a flexible ribbon line (10) having at least two electrical conductors (27) that extends in spires within an interstice (11) of the housing parts (1,2) and is attached at its end to a contact device having at least two contact elements (23), which device is arranged in a holder (21) of one of the housing parts (1,2), wherein each contact element (23) is a single-piece metal part having a surface (26) to which a respective conductor (27) of the ribbon line (10) is electrically connected and which connects one conductor (27) of the ribbon line (10) with a circular conductor (5,7),
**characterized in**
- **that** each contact element (23) is attached to the circular conductor (5,7) by crimping, and being fixed in a holder (21) assigned to it,
- **that** each contact element (23) has means that engage with one of the housing parts (1,2) and fix the contact element (23) against axial displacement in one direction and
- **that** each contact element (23) with an end face sits against a stop (32) of the housing part (1,2) which is opposite to the fixing area of the circular conductor (5,7) to fix the same in the opposite axial direction.

2. A rotary joint according to claim 1, **characterized in that** the holder (21) is arranged in an extension (20) of the corresponding housing part (1,2).

3. A rotary joint according to claim 1 or 2, **characterized in that** the holder (21) is sealed with a cover (22).

4. A rotary joint according to Claim 3, **characterized in that** the cover (22) presses the ribbon line (10) against a surface (28) of the housing part (1,2), in which the holder (21) is positioned.

5. A rotary joint according to claim 3 or 4, **characterized in that** the cover (22) has a spring element (33) applying pressure on each contact element (23) and/or the ribbon line (10).

6. A rotary joint according to one of the claims 3 to 5, **characterized in that** the cover (22) has means to apply radial pressure on the crimp connection, between contact element (23) and circular conductor (5,7).

## Revendications

1. Raccord rotatif avec deux éléments de boîtier rotatifs l'un par rapport à l'autre (1, 2), reliés par un câble plat flexible (10) présentant au moins deux conducteurs électriques (27), lequel s'enroule en spires dans un espace (10) délimité par les éléments de boîtier (1, 2) et appliqué à l'extrémité à un arrangement de contacts présentant au moins deux éléments de contact (23), dans lequel chaque élément de contact (23) est une pièce métallique d'un seul tenant, disposée dans un logement (21) dans un élément de boîtier (1, 2) et qui présente une surface (26) à laquelle est fixé d'une part le conducteur correspondant (27) du câble plat (10) électriquement de manière conductrice et à laquelle est raccordé d'autre part un conducteur rond électrique (5, 7), **caractérisé en ce que :**
- chaque élément de contact (23) est fixé au conducteur rond (5, 7) par sertissage et est disposé dans un logement qui lui est affecté (21),
- chaque élément de contact (23) présente des moyens, qui sont en prise avec un élément de boîtier (1, 2) et qui empêchent un déplacement axial dans un sens de l'élément de contact (23), et que
- chaque élément de contact (23) est plaqué avec une surface de contact opposée au point de connexion du conducteur rond (5, 7) contre une butée (32) de l'élément de boîtier (1, 2), laquelle immobilise ledit élément de contact axialement dans le sens opposé.

2. Raccord rotatif selon la revendication 1, **caractérisé en ce que** le logement (21) est disposé dans un prolongement (20) de l'élément de boîtier (1, 2) correspondant.

3. Raccord rotatif selon la revendication 1 ou 2, **caractérisé en ce que** le logement (21) est obturé avec un cache (22).

4. Raccord rotatif selon la revendication 3, **caractérisé en ce que** le cache (22) plaque le câble plat (10) contre une surface (28) de l'élément de boîtier (1, 2) pourvu du logement (21).

5. Raccord rotatif selon la revendication 3 ou 4, **caractérisé en ce que** le cache (22) présente un élément à ressort (33) qui est appliqué à chaque élément de contact (23) et/ou au câble plat (10).

6. Raccord rotatif selon l'une des revendications 3 à 5, **caractérisé en ce que** le cache (22) est appliqué par une pression radiale sur la liaison par sertissage entre l'élément de contact (23) et le conducteur rond (5, 7).
